# EUROPEAN PATENT SPECIFICATION

(11) **EP 2 347 607 B1**
(45) Date of publication and mention of the grant of the patent: **01.01.2020**
(21) Application number: 09825818.9
(22) Date of filing: 12.11.2009
(51) Int. Cl.: H04W 4/90, H04W 76/50

(54) **METHOD, APPARATUS AND COMPUTER READABLE STORAGE MEDIUM FOR SUPPORTING SRVCC EMERGENCY CALL**
VERFAHREN, VORRICHTUNG UND COMPUTERLESBARES SPEICHERMEDIUM ZUR UNTERSTÜTZUNG EINES SRVCC-NOTRUFS
PROCÉDÉ, APPAREIL ET SUPPORT DE STOCKAGE LISIBLE PAR ORDINATEUR DE PRISE EN CHARGE D'APPELS D'URGENCE SRVCC

(30) Priority: 12.11.2008 US 193257 P
(43) Date of publication of application: 27.07.2011
(73) Proprietor: Nokia Technologies Oy, 02610 Espoo (FI)
(72) Inventor: MUTIKAINEN, Jari, FIN-01830 Lepsama (FI); WONG, Curt, Sammamish WA 98074 (US)
(74) Representative: Ruuskanen, Juha-Pekka
(86) International application number: PCT/IB2009/007433
(87) International publication number: WO 2010/055398

(56) References cited:
- WO-A2-2007/072462
- US-A1- 2007 254 625
- ERICSSON: "VCC for emergency calls: MSC Enhancement", 3GPP DRAFT; S2-086928_WAS_S2-086753_VCC EMERGENCY MSC ENHANCEMENT R2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. China; 20081013, 13 October 2008 (2008-10-13), XP050331511, [retrieved on 2008-10-13]
- 3GPP: "3rd Generation Partnership Project;Technical Specification Group Services and System Aspects;Feasibility Study on Voice Call Continuity Support for Emergency Calls (Release 8)", 3GPP DRAFT; 23826-060-MARKED-UP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 28 October 2008 (2008-10-28), XP050331806, [retrieved on 2008-11-12]
- ERICSSON: "VCC for emergency calls: First conclusions", 3GPP DRAFT; S2-086754_VCC EMERGENCY FIRST CONCLUSIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. China; 20081007, 7 October 2008 (2008-10-07), XP050331364, [retrieved on 2008-10-07]
- '3rd Generation Partnership Project; Technical Specification Group Services and System Aspects; Feasibility Study on Voice Call Continuity Support for Emergency Calls (Release 8)' 3GPP TR 23.826 V0.6.0, [Online] October 2008, XP050331806 Retrieved from the Internet: <URL:http://www.3gpp.org/ftp/Specs/html-inf o/23826.htm>
- '3rd Generation Partnership Project; Technical Specification Group Services and System Aspects; Internet Protocol (IP) based IP Multimedia Subsystem (IMS) emergency sessions (Release 7)' 3GPP TR 23.867 V7.1.0, [Online] December 2005, XP050364009 Retrieved from the Internet: <URL:http://www.3gpp.org/ftp/Specs/html-inf o/23867.htm>
- NOKIA SIEMENS NETWORKS: 'Proposal for supporting SRVCC for IMS emergency' 3GPP TSG SA WG2 MEETING #69; TD S2-087688, [Online] pages 1 - 4, XP050332115 Retrieved from the Internet: <URL:http://www.3gpp.org/ftp/Specs/html-inf o/TDocExMtg--S2-69--26591.htm>
- NOKIA SIEMENS NETWORKS ET AL: 'SRVCC functionality for emergency calls' 3GPP TSG-SA WG2 MEETING #72; S2-092504, [Online] 30 March 2009, HANGZHOU, CHINA, XP050345763 Retrieved from the Internet: <URL:http://www.3gpp.org/ftp/Specs/html-inf o/TDocExMtg--S2-72--27283.htm>
- CHINA MOBILE, HUAWEI, ZTE: 'Change for SR VCC Emergency' 3GPP TSG-SA WG2 MEETING #72; S2-092506, [Online] 30 March 2009, HANGZHOU, CHINA, XP003026410 Retrieved from the Internet: <URL:http://www.3gpp.org/ftp/Specs/html-inf o/TDocExMtg--S2-72--27283.htm>

## Description

### FIELD

The present invention relates generally to communication networks. More specifically, the present invention relates to communication networks supporting emergency sessions and calls.

### BACKGROUND

Currently developed telecommunication technologies provide solutions for performing a handover (HO) operation from a Long Term Evolution (LTE) or High Speed Packet Access (HSPA) system to a second generation (2G) or third generation (3G) cellular telecommunications network under non-emergency conditions. Such an operation often involves a handover from a Voice over Internet Protocol (VoIP) session using Internet Protocol Multimedia Subsystems (IMS) to a circuit switched domain, and is sometimes referred to as a single radio voice call continuity (SRVCC) operation.

In currently available SRVCC operations, a handover typically involves a mobile switching center (MSG) executing a domain transfer using a session transfer number (STN-SR). The STN-SR may be a unique number or value (such as an E. 164 address) that is stored in a Home Subscriber Server (HSS) of a user. The STN-SR routes to a Service Centralization and Continuity Application Server (SCC AS) of the home network. In some implementations, the home network represents a network which includes a home subscriber server for the user equipment. Although telecommunication technologies provide for such handover operations under normal conditions, currently available technologies fail to provide adequate solutions for such a handover during an emergency session.

This deficiency is due, at least in part, to the fact that the STN-SR routes to an SCC AS in the user's home network, whereas emergency calls or sessions are assumed to be in a visiting network. Additionally, Dual-Radio Voice Call Continuity (Dual-Radio VCC) technology fails to provide a viable solution. In Dual-Radio VCC, the SCC AS returns a dynamic STN to the UE in session initiation protocol (SIP) signaling when the emergency call is established. The UE then uses the dynamic STN to execute a domain transfer. However, this solution cannot be used in an emergency SRVCC scenario because an SRVCC handover and domain transfer is triggered by the visited network, which is not aware of the dynamic STN. Accordingly, currently available telecommunication technologies fail to provide support for SRVCC emergency calls or sessions.

Ericsson "VCC for emergency calls: MSC Enhancement" S2-086928 discusses the handover from a packet switched network to a circuit switched circuit network, wherein the emergency session transfer number is merely detected by the mobility switching centre.

3GPP: "3rd Generation Partnership Project; Technical Specification Group Services and System Aspects; Feasibility Study on voice Call Continuity Support for Emergency Calls (Release 8)" F-06921 discusses a user equipment establishing the transfer leg of the emergency session towards the emergency remote user agent by setting up a call in the circuit switched domain towards the session transfer number downloaded as part of the original packet switched emergency establishment.

### SUMMARY

A method and apparatus, including computer program products, are provided for SRVCC emergency call support.

In one aspect there is provided a method. The method may include receiving, at a mobility switching center, a first message representing a request to handover an emergency communication session from a first network to a second network. The mobile switching center may obtain a value representing an emergency session transfer number, wherein obtaining the value comprises: generating the value representing the emergency session transfer number at the mobile switching center. The mobility switching center may also send a second message to the first network. The second message may initiate handover of the emergency communication session from the first network to the second network. The second message may comprise the value representing the emergency session transfer number.

In another aspect there is provided an apparatus. The apparatus may include at least one processor and at least one memory. The at least one processor and the at least one memory may be configured to provide operations. The operations may comprise receiving a first message representing a request to handover an emergency communication session from a first network to a second network. The operations may further comprise obtaining a value representing an emergency session transfer number, wherein obtaining the value comprises: generating the value representing the emergency session transfer number at the mobile switching center. The operations may further comprise sending a second message to the first network. The second message may initiate handover of the emergency communication session from the first network to the second network. The second message may comprise the value representing the emergency session transfer number.

In yet another aspect a computer-readable medium may include code which when executed on at least one processor provides a process. The process may comprise receiving a first message representing a request to handover an emergency communication session from a first network to a second network. The process may further comprise obtaining a value representing an emergency session transfer number, wherein obtaining the value comprises: generating the value representing the emergency session transfer number at the mobile switching center. The process may further comprise sending a second message to the first network. The second message may initiate handover of the emergency communication session from the first network to the second network. The second message may comprise the value representing the emergency session transfer number.

The details of one or more variations of the subject matter described herein are set forth in the accompanying drawings and the description below. Other features and advantages of the subject matter described herein will be apparent from the description and drawings, and from the claims.

### DESCRIPTION OF DRAWINGS

In the drawings,
FIG. 1 depicts a block diagram of an SRVCC emergency call support system in accordance with embodiments of the present invention;
FIG. 2 depicts a block diagram of a mobility management entity (MME) in accordance with embodiments of the present invention;
FIG. 3 depicts a block diagram of an SRVCC mobility switching center in accordance with embodiments of the present invention;
FIG. 4 depicts a flow chart of a method for a mobility management entity to initiate an emergency session continuity procedure in accordance with embodiments of the present invention;
FIG. 5 depicts a flow chart of a method for a mobility switching center to initiate an emergency session continuity procedure in accordance with embodiments of the present invention;
FIG. 6 depicts a sequence flow chart of a bearer-level process for initiating an emergency session continuity procedure in accordance with embodiments of the present invention; and
FIG. 7 depicts a sequence flow chart diagram of an IMS-level process for initiating an emergency session continuity procedure in accordance with embodiments of the present invention.

Like labels are used to refer to same or similar items in the drawings.

### DETAILED DESCRIPTION

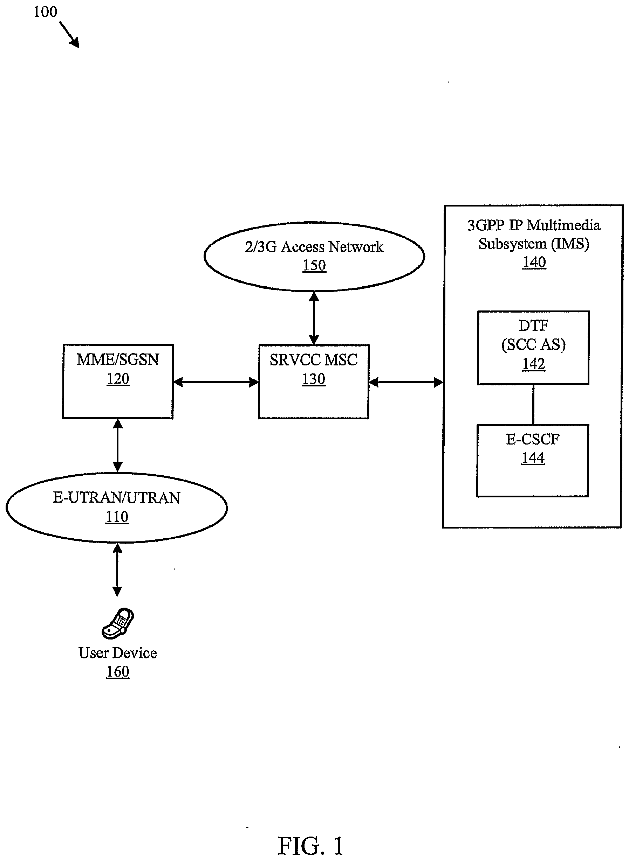

FIG. 1 is a block diagram of an SRVCC emergency call support system 100. The system 100 includes an Evolved Universal Terrestrial Radio Access Network (E-UTRAN) 110, a Mobility Management Entity (MME) 120 (which may also be configured as a GPRS Support Node (SGSN)), an SRVCC Mobile Switching Center (SRVCC MSC) 130, a 3rd Generation Partnership Program (3GPP) Internet Protocol Multimedia Subsystem (IMS) 140, a 3rd Generation Access Network (3G) 150, and a user device 160. The components of the system 100 cooperate to enable support for a Single Radio Voice Call Continuity (SRVCC) emergency call in accordance with the implementations described herein.

In certain embodiments, the user device 160 initiates an IMS emergency session with a Long Term Evolution (LTE) or High Speed Packet Access (HSPA) network, represented by the E-UTRAN 110. In some embodiments, the E-UTRAN 110 is a visited network with respect to the user device 160. The emergency session may be a Voice over Internet Protocol (VoIP) IMS session. In some embodiments, as the user device 160 moves, E-UTRAN 110 is configured to detect that a handover (HO) of the session to the 2G/3G Access Network 150 may be desirable because the radio access area for the VoIP/IMS session has become weak.

In such a scenario, the E-UTRAN 110 may initiate an SRVCC operation, which may include performing or executing operations found in Release 8 of Technical Specification (TS) 23.216 of the 3rd Generation Partnership Program (3GPP). In some embodiments, this may include the E-UTRAN 110 communicating with the MME 120 to indicate a need to perform a single radio voice call continuity (SRVCC) operation for the emergency session established by the user device 160.

In response, the MME (or SGSN) 120 may use a "Sv" interface to initiate the SRVCC operation. In some embodiments, the MME 120 may provide the MSC 130 with an Emergency Session Transfer Number for SRVCC (E-STN-SR) to facilitate the SRVCC operation. In other embodiments, the MME may indicate a need to perform an SRVCC operation for the emergency session without providing an E-STN-SR.

In certain embodiments, the MSC 130 may be configured to obtain the E-STN-SR from the MME 120. In some embodiments, the MSC 130 may be configured to obtain the E-STN-SR by generating the E-STN-SR or by retrieving the E-STN-SR from a local data repository. In certain embodiments, the E-STN-SR is a non-unique number or value which may not be stored in a Home Subscriber Server, as opposed to the STN-SR value or number that is often stored in a Home Subscriber Server for each user and used in an SRVCC operation under normal or non-emergency scenarios. The E-STN-SR may be configured to point to a local IMS network that handles the IMS emergency session.

Upon obtaining the E-STN-SR, the MSC 130 (or MSC enhanced with SRVCC) may use the E-STN-SR to initiate an SRVCC operation or "session continuity" operation by communicating with the 3GPP IMS 140 as defined in 3GPP TS 23.216. As a result, when the local IMS receives the INVITE with E-STN-SR, the local IMS may perform a domain transfer using a Domain Transfer Function 142 (DTF or SCC AS) and an Emergency Call Session Control Function (E-CSCF) 144, which may include procedures similar to those defined in 3GPP TR 23.826 (section 6.1.4.2) for Dual Radio VCC. Additionally, the MSC 130 may initiate a handover procedure with the target network as defined in 3GPP TS 23.216.

Additional procedures may also be performed by the system 100 to complete the SRVCC operation. Such procedures may include those defined by 3GPP TS 23.216, where a handover (HO) command (CMD) is sent to the user device 160 and the user device 160 switches over to the 2G/3G Access Network 150. Accordingly, the system 100 provides a solution for supporting SRVCC emergency calls by using an E-STN-SR that is locally generated or stored in the visited network.

It should be appreciated that a system, in accordance with the present invention, may include terminals, nodes and networks in addition to the components depicted in the system 100 of FIG. 1. Additionally, a visited IMS network may be used for routing a session to a Public Safety Answering Point (PASP), and a Session Initiation Protocol (SIP) may be anchored by a Domain Transfer Function (DTF) server or a Centralization and Continuity Application Server (SCC AS) similar to those presented in 3GPP TR 23.826.

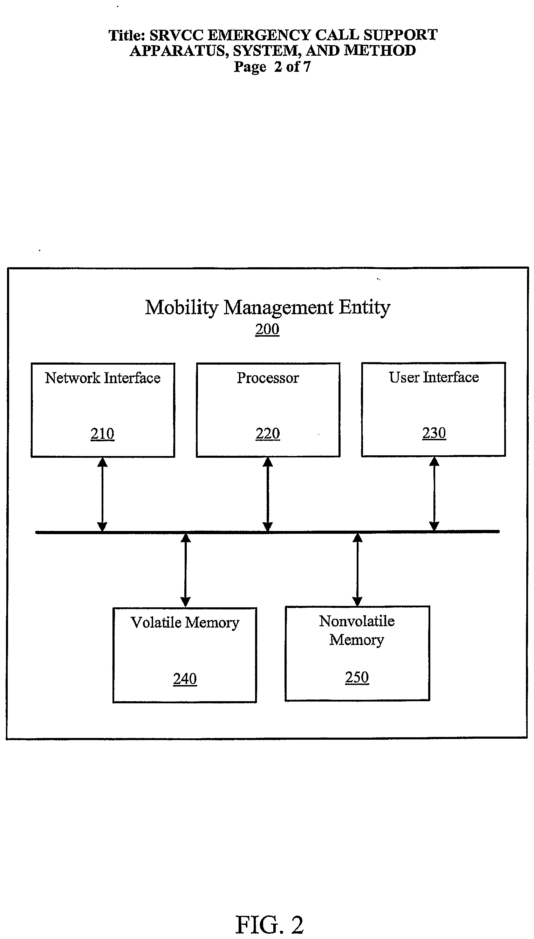

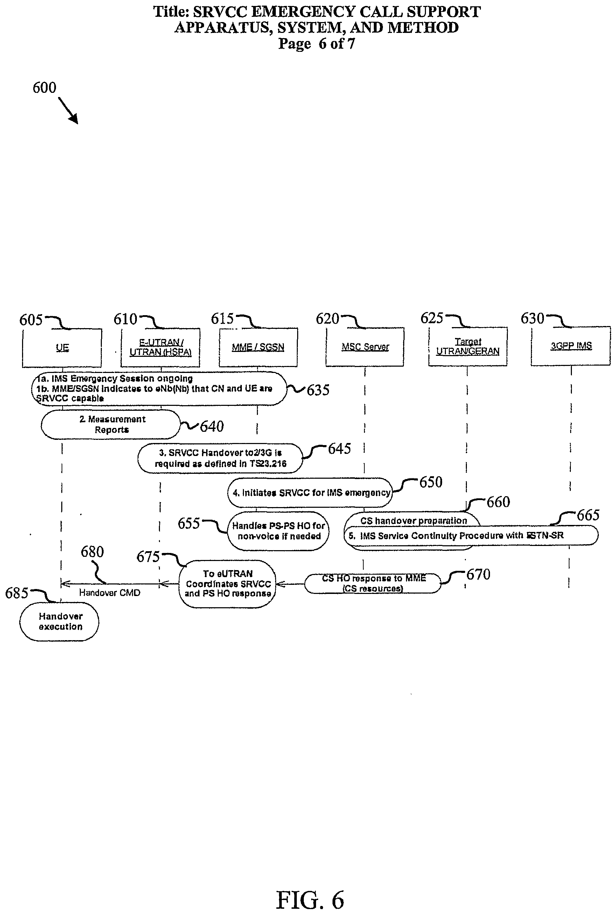

FIG. 2 is a block diagram of a mobility management entity (MME) 200. The MME 200 includes a network interface 210, a processor 220, a user interface 230, a volatile memory 240, and a nonvolatile memory 250. In certain embodiments, the MME 200 of FIG. 2 corresponds to the MME 120 of FIG. 1. In some embodiments, the MME 120 may be a Serving GPRS Support Node (SGSN) as depicted in FIG 1 and FIG. 6. The components of the MME 200 cooperate to initiate an emergency session continuity.

In certain embodiments, the network interface 210 is configured to enable communication between the MME 200 and other network devices. In some embodiments, such network devices may include those represented by FIG. 1, such as a device of the E-UTRAN 110 or the MSC 130. The network interface 210 may include one or more hardware components operating in accordance with one or more protocols or software instructions. Accordingly, the network interface 210 may enable communication between the MSC 300 and one or more network devices to facilitate the initiation of an emergency session continuity procedure.

In some embodiments, the processor 220 may be configured to receive session continuity data from a radio access network, such as an E-UTRAN or a UTRAN. The session continuity data may include an indication of an emergency SRVCC event or operation. An emergency SRVCC event may include a scenario where a handover of an emergency call is required because a mobile device has initiated an IMS emergency session with a visiting LTE or HSPA device, but a handover of the emergency session is required. Accordingly, the processor 220 may be configured to receive session continuity data from a radio access network to facilitate supporting an SRVCC emergency call.

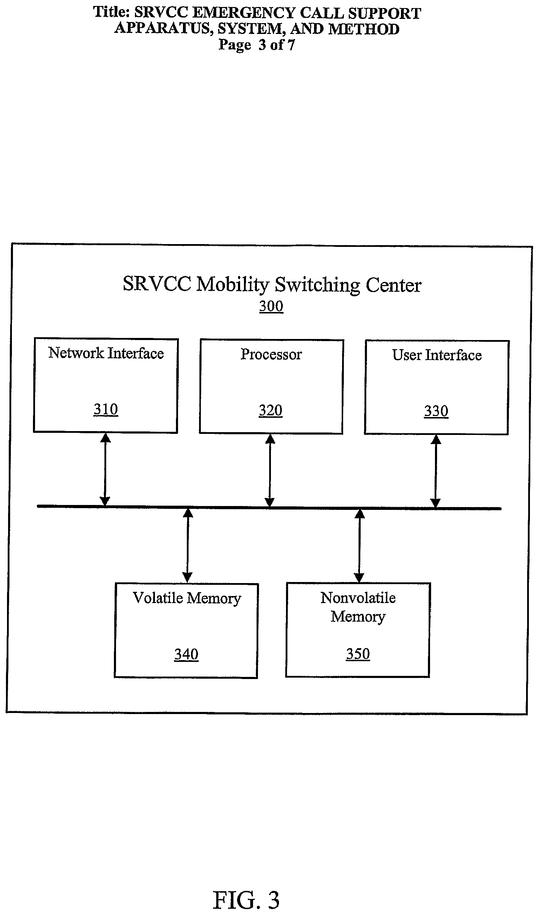

In some embodiments, the processor 220 may also be configured to initiate an emergency session continuity procedure via an MSC. In some embodiments, the MSC may correspond to the MSC 130 of FIG. 1 or the MSC 300 of FIG 3. In some embodiments, the processor 220 may be configured to initiate an emergency session continuity procedure by communicating emergency session continuity data to the MME. The emergency session continuity data may include an Emergency Session Transfer Number for SRVCC (E-STN-SR). In some embodiments, the E-STN-SR is configured to point toward a local IMS network that handles the emergency session. In other embodiments, the emergency session continuity data may include instructions or an indication that the MSC must obtain an E-STN-SR from, for example, a local data repository. Accordingly, the processor 220 may receive session continuity data from a radio access network and initiate an emergency session continuity procedure via an MCS to facilitate the initiation of an emergency session continuity procedure.

In certain embodiments, the user interface 230 may include a combination of hardware and software that facilitates communication between the mobility management entity 200 and a user of the mobility management entity 200. For example, a user interface 230 may include one or more speakers, one or more user-pressable buttons, one or more key pads, one or more digital screens, one or more lights, or any other feature that would facilitate bidirectional communication between the mobility switching center 300 and a user. Accordingly, the user interface 230 may facilitate an interaction between a user and the mobility management entity 200.

In some embodiments, the volatile memory 240 may include any variety of volatile storage mediums. For example, the volatile memory device 240 may include a device comprising a volatile storage component, a primary storage component, a random access memory (RAM) component, and/or a dynamic random access memory (DRAM) component such as a double data rate synchronous dynamic access memory (DDR SDRAM) component. Accordingly, the volatile memory 240 may provide a temporary data storage structure that functionally interacts with other components, such as the processor 220 and the nonvolatile storage device 250.

In some embodiments, the nonvolatile memory device 250 may include a variety of nonvolatile storage mediums such as digital devices that retain data when a power supply is disconnected. For example, the nonvolatile memory device 250 may include any variety of a read-only memory (ROM) components such as a programmable read-only memory (PROM), a field programmable read-only memory (EAROM), an erasable programmable read-only memory (EPROM), or an electrically erasable programmable read-only memory (EEPROM).

Examples of the nonvolatile memory device 250 may also include optical memory components such as an optical disk, a paper tape, or a punch card. Accordingly, in certain embodiments, the nonvolatile memory device 250 may be configured to functionally interact with other MSC components, such as the processor 220, to enable and/or initiate an emergency session continuity procedure.

FIG. 3 is a block diagram of an SRVCC mobility switching center (MSC) 300. The depicted MSC 300 may include a network interface 310, a processor 320, a user interface 330, a volatile memory 340, and a nonvolatile memory 350. In some embodiments, the MSC 300 may correspond to the MSC 130 of FIG. 1. The components of the MSC 300 may cooperate to initiate an emergency session continuity procedure as described herein.

In some embodiments, the network interface 310 is configured to enable communication between the MSC 300 and other network devices. In some embodiments, such network devices may include those represented by FIG. 1, such as an MME/SGSN 120, a 2G/3G Access Network device 150, or a 3GPP IMS device 140. The network interface 310 may include one or more hardware components operating in accordance with one or more protocols or software instructions. Accordingly, the network interface 310 may enable communication between the MSC 300 and one or more network devices to facilitate the initiation of an emergency session continuity procedure:

In some embodiments, the processor 320 is configured to receive continuity data corresponding to a handover operation of an emergency session. The continuity data may include an indication of an emergency SRVCC operation or event. An emergency SRVCC event may include a scenario where a handover of an emergency call is required because a mobile device has initiated an IMS emergency session with a visiting LTE or HSPA device, but a handover of the emergency call is required. In some embodiments, the emergency session continuity data is received from an MME. As mentioned above, the emergency session continuity data may include an Emergency Session Transfer Number for SRVCC (E-STN-SR). In some embodiments, the E-STN-SR is configured to point toward a local IMS network (e.g. an IMS network which a user is visiting) that handles the emergency session. Additionally, the E-STN-SR may be a non-unique number. Accordingly, the processor 320 may be configured to receive continuity data corresponding to an emergency session.

In some embodiments, the processor 320 may be also configured to obtain emergency session transfer data in response to receiving the session continuity data. In certain embodiments, the processor 320 is configured to obtain the session transfer data from a local data repository such as the nonvolatile memory 350. In some embodiments, the processor 320 is configured to obtain the session transfer data from the emergency session transfer data received. As noted above, the session transfer data may include data received from an MME such as the MME 130 of FIG. 1. Accordingly, the processor 320 may be configured to obtain emergency session transfer data in response to receiving the session continuity data.

In some embodiments, the processor 320 may be configured to initiate an emergency session continuity procedure using the emergency session transfer data. As noted above, the emergency session continuity data may be a non-unique number. In certain embodiments, the emergency session continuity procedure comprises an emergency session continuity procedure with a local visited IMS network. In some embodiment, the emergency session continuity procedure follows a set of operations as those set forth in 3GPP TR 23.826, where a domain transfer function (DTF or SCC AS) performs a switching of access legs from IMS to circuit switched (CS). In some embodiments, emergency session continuity procedure also includes performing a handover procedure with a target access as defined by 3GPP TR 23.8216. Accordingly, the processor 320 may be configured to initiate an emergency session continuity procedure using the emergency session transfer data.

In some embodiments, the user interface 330 may include a combination of hardware and software that facilitates communication between the mobility switching center 300 and a user of the mobility switching center 300. For example, a user interface 330 may include one or more speakers, one or more user-pressable buttons, one or more key pads, one or more digital screens, one or more lights, or any other feature that would facilitate bidirectional communication between the mobility switching center 300 and a user. Accordingly, the user interface 330 may facilitate an interaction between a user and the mobile switching center 300.

In some embodiments, the volatile memory 340 may include any variety of volatile storage mediums. For example, the volatile memory device 340 may include a device comprising a volatile storage component, a primary storage component, a random access memory (RAM) component, and/or a dynamic random access memory (DRAM) component such as a double data rate synchronous dynamic access memory (DDR SDRAM) component. Accordingly, the volatile memory 340 may provide a temporary data storage structure that functionally interacts with other components, such as the processor 320 and the nonvolatile storage device 350.

In some embodiments, the nonvolatile memory device 350 may include a variety of nonvolatile storage mediums such as digital devices that retain data when a power supply is disconnected. For example, the nonvolatile memory device 350 may include any variety of a read-only memory (ROM) components such as a programmable read-only memory (PROM), a field programmable read-only memory (EAROM), an erasable programmable read-only memory (EPROM), or an electrically erasable programmable read-only memory (EEPROM). Examples of the nonvolatile memory device 350 may also include optical memory components such as an optical disk. Accordingly, in some embodiments, the nonvolatile memory device 350 may be configured to functionally interact with other MSC components, such as the processor 320, to enable and/or initiate an emergency session continuity procedure.

The processor, such as processor 220 or 320 may be implemented as a hardware circuit comprising custom VLSI circuits or gate arrays, off-the-shelf semiconductors such as logic chips, transistors, or other discrete components. The processor 320 may also be implemented in programmable hardware devices such as field programmable gate arrays, programmable array logic, programmable logic devices or the like. The processor 320 may also be implemented as a single processing device or as several processing devices configured to perform a given operation or task.

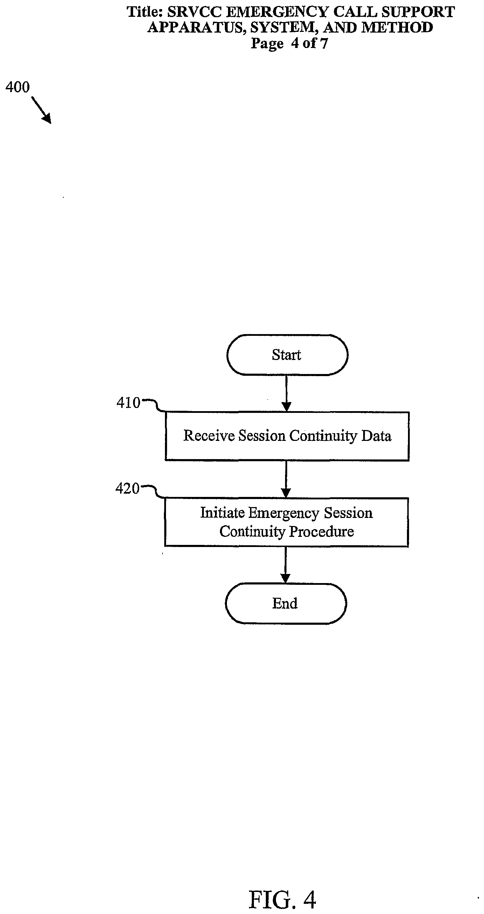

FIG. 4 is a flow chart diagram of a method 400 for a mobility management entity to initiate an emergency session continuity procedure. The depicted method 400 includes receiving 410 session continuity data and initiating 420 emergency session continuity procedure. In some embodiments, the method 400 may be performed by the MME/SGSN 120 of FIG. 1 or the MME 200 of FIG. 2. It should be appreciated that each operation of the method 400 may be performed, at least, in part by a processor of an MME, such as the processor 220 of MME 200. The operations of the method 400 provide a solution for initiating an emergency session continuity procedure in accordance with the present invention.

In some embodiments, receiving 410 may include an MME receiving continuity data from an E-UTRAN or UTRAN. The continuity data may include an indication of an SRVCC event. As noted above, an emergency SRVCC event may include a scenario where a handover of an emergency call is required because a mobile device has initiated an IMS emergency session with a visiting LTE or HSPA device.

In some embodiments, initiating 420 an emergency session continuity procedure may include an MME initiating an emergency session procedure by transmitting continuity data to an MSC such as the MSC 130 of FIG. 1. In some embodiments, the continuity data may include an indication that an SRVCC event is required. Additionally, the continuity data may include an indication that the MSC should obtain emergency session transfer data that is stored locally on the MSC. In other embodiments, the continuity data may include emergency transfer data. Emergency session transfer data may include various data such as a unique number. Accordingly, the method 400 provides a solution for an MME to initiate an emergency session continuity procedure.

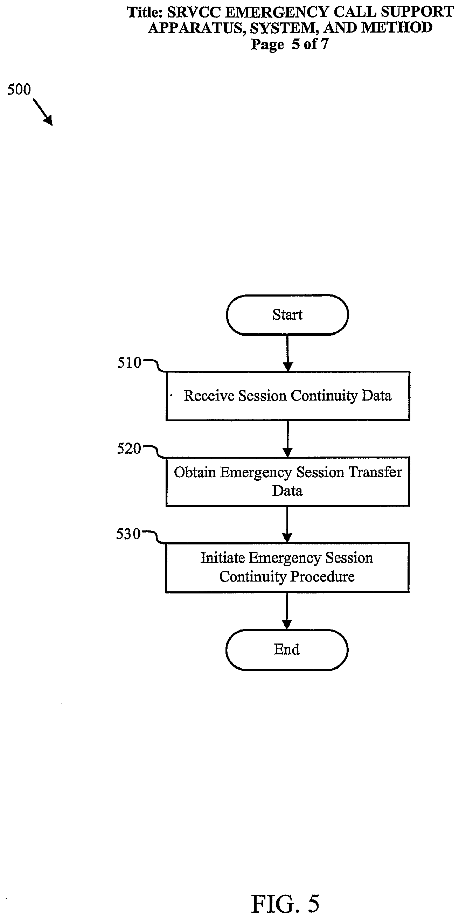

FIG. 5 is a flow chart diagram of a method 500 for a mobility switching center to initiate an emergency session continuity procedure. The method 500 includes receiving 510 session continuity data, obtaining 520 emergency session transfer data, and initiating 530 emergency session continuity procedure. In some embodiments, the operations of the method 500 may be performed or executed by the MSC 130 of FIG. 1 and/or the MSC 300 of FIG. 3. It should be appreciated that each of the operations for the method 500 may be performed, at least in part, by a processor of an MSC, such as the MSC 300 of FIG. 3. The operations of the method 500 provide one solution for initiating an emergency session continuity in accordance with the present invention.

In some embodiments, receiving 510 session continuity data may include an MSC receiving an SRVCC indication from an MME such as the MME/SGSN 120 of FIG. 1 and/or the MME 200 of FIG. 2. In some embodiments, the session continuity data may include an indication that the MSC should retrieve a non-unique number such as an E-STR-SN from a local data storage repository.

In some embodiments, obtaining 520 emergency session transfer data may include an MSC retrieving session continuity data from a local data storage repository such as a non-volatile memory. In other embodiments, obtaining 520 emergency session transfer data may include obtaining session transfer data from the session continuity data previously received 510. In some embodiments, the obtaining 520 may include performing one or more operations to generate emergency session transfer data. The emergency session transfer data may include a non-unique number.

Initiating 530 an emergency session continuity may include an MSC using the emergency session transfer data to initiate one or more operations where a domain transfer function (DTF or SCC AS) performs a switching of access legs from IMS to CS. In some embodiments, initiating 530 may include executing or performing one or more operations corresponding to 3GPP TS 23.826. Accordingly, the method 500 provides a solution for initiating an emergency session continuity.

FIG. 6 is a sequence flow chart diagram of a bearer-level process 600 for initiating an emergency session continuity procedure. The depicted process 600 includes operations performed by a user equipment (UE) 605, an E-UTRAN/UTRAN or HSPA 610, an MME/SGSN 615, a MSC Server 620, a Target UTRAN/GERAN 625, and a 3GPP IMS 630. In some embodiments, at least some of the operations of the bearer-level process 600 are performed by one or more of the components of the system 100. The process 600 may initiate an emergency session continuity procedure.

The process begins by the UE 605 initiating 635 an IMS emergency session and the MME/SGSN 615 indicating to a base station or to an enhanced base station that a core network and/or the UE 605 is SRVCC capable. After or during the operation 635, reports relevant to the IMS emergency session are measured 640. Next, the E-UTRAN 610 determines 645 that a handover to a 2G/3G network is required and communicates this to the MME 615, as defined by TS 23.216.

Upon determining 645 that a handover is required, the process 600 continues by the MME 615 initiating 650 an SRVCC for the IMS emergency session via an "Sv" interface. If a packet switched to packet switched (PS-PS) handover (HO) is needed, the MME 615 may handle the PS-PS HO 655. Additionally, the process 600 may continue to execute 660 circuit switched handover preparations.

With the operation 660, the process 600 continues by the MSC 620 initiating 665 an IMS service continuity procedure using an E-STN-SR (emergency session transfer number single radio voice call continuity) with the target UTRAN/GERAN 625 and 3GPP IMS 630. The process 600 continues by the MSC 620 transmitting 670 a CS HO response to the MME 615. In turn, the MME 615 communicates 675, to the E-UTRAN 610, a PS HO response to coordinate an SRVCC event. A HO command is then communicated 680 to the UE 605, and the UE 602 executes 685 the HO. Accordingly, the process 600 provides a solution for initiating an emergency session continuity procedure.

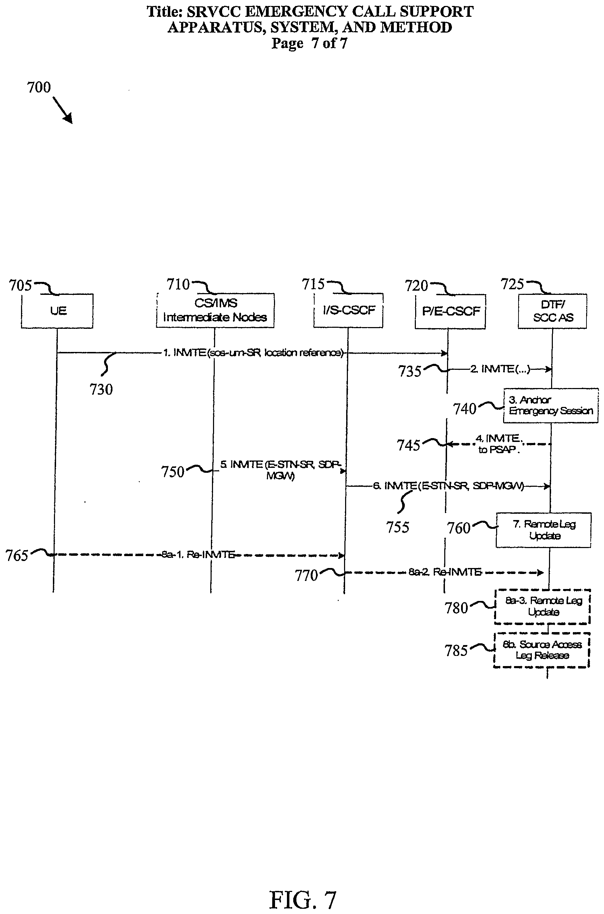

FIG. 7 is a sequence flow chart diagram of an IMS-level process 700 for initiating an emergency session continuity procedure. The depicted process 700 includes a UE 705, CS/IMS intermediate nodes 710, an Interrogating or Service CSCF 715, a Proxy or Emergency CSCF 720, and a DTF/SCC AS 725. In some embodiments, operations of the IMS-level process 700 may be performed by the system 1 of FIG. 1. The IMS-level process 700 provides a solution for initiating an emergency session continuity.

The process 700 begins by the user equipment 705 communicating 730 an INVITE message to the P/E-CSCF 720. Thereafter, the process 700 continues by the P/E-CSCF 720 communicating 735 an INVITE to the DTF/SCC AS 725. Next, the DTF/SCC AS 725 operates to anchor 740 emergency session and then communicate 745 a PSAP INVITE to the P/E-CSCF 720. The DTF/SCC AS 725 may anchor the emergency call session and act as a Back-to-back User Agent (B2BUA) as defined in 3GPP TR 23.826.

After the communicating 745 of the INVITE, the CS/IMS Intermediate nodes 710 communicate 750 an INVITE message with an E-STN-SR to the I/S-CSCF 715, and the I/S-CSCF 715 communicates 755 an INVITE using the E-STN-SR to the DTF/SCC AS 725. Then, the DTF/SCC AS 725 performs 760 a remote leg update. It should be noted that the DTF/SCC AS 725 may use the E-STN-SR to determine that Access Transfer using SRVCC is requested. The DTF/SCC AS 725 may proceed with the Access Transfer of the active session with bidirectional speech for the UE by updating the Remote Leg with the media description and other information using the Remote Leg Update procedure as specified in Clause 6.3.1.5 of G3PP TS 23.237.

After the remote let update, the UE 705 communicates 765 a Re-INVITE to the I/S-CSCF 715, and the I/S-CSCF 715 communicates 770 a Re-INVITE message to the DTF/SCC AS 725. Upon receiving the Re-INVITE message, the DTF/SCC AS 725 performs 775 a remote leg update and also performs 780 a source access leg release. In this manner, the process 700 provides a solution for performing an emergency session continuity event in accordance with the present invention.

It should be appreciated that operation 765 to 780 may be performed in accordance with procedures defined in Clauses 6.3.2.1.4 and 6.3.1.6 of 3GPP 23.237. For example, if a Gm reference point is retained upon a PS handover, then the UE sends a Re-INVITE via the PS access to update the remaining non-voice media associated with the recently added active session. Additionally, standard procedures may be used at the S-CSCF for routing of the INVITE to the SCC AS, and the SCC AS processes the Re-INVITE and updates the Remote Leg if needed. However, if the Gm reference point is not retained upon a PS handover procedure, or if there was no other non-voice media in the IMS session than the voice that was transferred to the target access, then the Source Access Leg is released.

The processes described herein may be practiced in a different order, and/or with hardware elements in configurations that are different from those which are disclosed. Moreover, the subject matter described herein may be may be modified, varied, and otherwise changed while remaining within the scope of the appended claims..

It should be noted that reference throughout this specification to features, advantages, or similar language does not imply that all of the features and advantages that may be realized are present in any single implementation. Rather, language referring to the features and advantages is understood to mean that a specific feature, advantage, or characteristic described in connection with an embodiment may be present in some implementations. One skilled in the relevant art will recognize that the invention can be practiced without one or more of the specific features or advantages of a particular embodiment. In other instances, additional features and advantages may be recognized in some embodiments that may not be present in all embodiments of the invention.

In one aspect, a method comprises receiving session continuity data corresponding to an emergency session, obtaining emergency session transfer data, and initiating an emergency session continuity procedure using the emergency session transfer data. In some embodiments, the operations of the method are performed by an mobile switching center. In some embodiments, the receiving of the emergency session continuity data comprises receiving emergency session continuity data from a mobility management entity. In some embodiments, the receiving of the emergency session continuity data comprises receiving single radio voice call continuity data.

Additionally, the obtaining of the emergency session transfer data may include obtaining emergency session transfer data from a mobility management entity. In some embodiments, the obtaining of the emergency session transfer data comprises obtaining emergency session transfer data in a local data storage repository. In some embodiments, the obtaining of the emergency session transfer data comprises obtaining a non-unique number. Furthermore, the initiating of the emergency session continuity procedure may comprise initiating an emergency session continuity procedure corresponding to an internet protocol multimedia subsystem.

In another aspect, an apparatus comprises a processor configured receiving session continuity data corresponding to an emergency session, obtain emergency session transfer data, and initiate an emergency session continuity procedure using the emergency session transfer data. In some embodiments, the apparatus comprises a mobile switching center. In some embodiments, the processor may be configured to receive the emergency session continuity data from a mobility management entity. In some embodiments, the processor may be configured to receive single radio voice call continuity data.

Additionally, the processor may be configured to obtain the emergency session transfer data from a mobility management entity. In some embodiments, the processor may be configured to obtain the emergency session transfer data from a local data storage repository. Furthermore, the processor may be configured to obtain the emergency session transfer data by obtaining a non-unique number. In some embodiments, the processor may be configured to initiate an emergency session continuity procedure corresponding to an internet protocol multimedia subsystem.

In another aspect, a computer program is embodied on a computer-readable medium. The computer program may be configured to control a processor to perform operations that comprise receiving session continuity data corresponding to an emergency session, obtaining emergency session transfer data, and initiating an emergency session continuity procedure using the emergency session transfer data.

In yet another aspect there is provided an apparatus comprises a receiving means for receiving session continuity data corresponding to an emergency session, a obtaining means for obtaining emergency session transfer data, and an initiating means for initiating an emergency session continuity procedure using the emergency session transfer data.

In still another aspect, a method comprises receiving session continuity data from a radio access network, the session continuity data corresponding to an emergency session, and initiating an emergency session continuity procedure via a mobile switching center server. In some embodiments, the operations of the method are performed by a mobility management entity. In some embodiments, the initiating of the emergency session continuity procedure comprises transmitting emergency session transfer data to the mobile switching center server.

In another aspect, an apparatus comprises a processor configured to receive session continuity data from a radio access network, where the session continuity data corresponds to an emergency session, and to initiate an emergency session continuity procedure via a mobile switching center server. In some embodiments, the apparatus comprises a mobility management entity. In some embodiments, the processor is further configured to transmit emergency session transfer data to the mobile switching center server.

In another aspect, a computer program is embodied on a computer-readable medium. The computer program may be configured to control a processor to perform operations that comprise receiving session continuity data from a radio access network, where the session continuity data corresponds to an emergency session, and initiating an emergency session continuity procedure via a mobile switching center server.

In another aspect, an apparatus comprises a receiving means for receiving session continuity data from a radio access network, where the session continuity data corresponding to an emergency session, and an initiating means for initiating an emergency session continuity procedure via a mobile switching center server.

In yet another aspect, a system comprises a mobility management device and a mobility switching center. The mobility management device may be configured to receive session continuity data from a radio access network, and initiate an emergency session continuity procedure via a mobile switching center server, the session continuity data corresponding to an emergency session. The mobility switching center may be configured to receive the session continuity data, obtain emergency session transfer data, and initiate an emergency session continuity procedure using the emergency session transfer data.

Articles are also described that comprise a tangibly embodied machine-readable medium (also referred to as a computer-readable medium) embodying instructions that, when performed, cause one or more machines (e.g., computers, etc.) to result in operations described herein. Similarly, computer systems, nodes of a network, and the like are also described that may include one or more processors and/or one or more memory coupled to the processor. The memory may include one or more programs that cause the processor to perform one or more of the operations described herein.

The features, structures, or characteristics of the invention described throughout this specification may be combined in any suitable manner in one or more embodiments. For example, reference throughout this specification to "certain embodiments," "some embodiments," or similar language means that a particular feature, structure, or characteristic described in connection with the embodiment may be included in at least one embodiment of the present invention. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It will be readily understood that the components of the present invention, as generally described and illustrated in the figures herein, may be arranged and designed in a wide variety of different configurations. Thus, the following more detailed description of the embodiments of the apparatus, system, and method of the present invention, as represented in the attached figures, is not intended to limit the scope of the invention, as claimed, but is merely representative of selected embodiments of the invention.

## Claims

1. A method comprising:
receiving (510), at a mobility switching center, a first message representing a request to handover an emergency communication session from a first network to a second network;
obtaining (520), by the mobility switching center, a value representing an emergency session transfer number, wherein obtaining the value representing the emergency session transfer number comprises: generating the value representing the emergency session transfer number at the mobility switching center (130, 300); and
sending (530), by the mobility switching center, a second message to the first network, the second message initiating handover of the emergency communication session from the first network to the second network, the second message comprising the value representing the emergency session transfer number.

2. The method of claim 1, wherein obtaining further comprises:
obtaining, by the mobility switching center, the value representing the emergency session transfer number locally rather than obtaining a session transfer number from a home subscriber server at a home network.

3. The method of claim 1, wherein the value representing the emergency session transfer number is common to a plurality of emergency communication sessions.

4. The method of claim 1, wherein the first network is an internet protocol multimedia subsystem, and wherein the second network is one of a second generation cellular communications network and a third generation cellular communications network.

5. The method of claim 1, wherein the value representing the emergency session transfer number comprises an international telecommunications union E.164 address.

6. The method of claim 1, wherein the second message comprises a session initiation protocol invite message.

7. The method of claim 1, wherein the first message initiates a single radio voice call continuity for an internet protocol multimedia subsystem emergency.

8. The method of claim 1, wherein receiving further comprises: receiving, at a visited network, the first message.

9. An apparatus for a mobility switching center (130, 300) comprising:
at least one processor; and
at least one memory, wherein the at least one processor and the at least one memory are configured to provide operations comprising:
receiving (510) a first message representing a request to handover an emergency communication session from a first network to a second network;
obtaining (520) a value representing an emergency session transfer number, wherein obtaining the value representing the emergency session transfer number comprises:
generating the value representing the emergency session transfer number at the mobility switching center; and
sending (530) a second message to the first network, the second message initiating handover of the emergency communication session from the first network to the second network, the second message comprising the value representing the emergency session transfer number.

10. The apparatus of claim 9, wherein obtaining further comprises:
obtaining the value representing the emergency session transfer number locally rather than obtaining a session transfer number from a home subscriber server at a home network.

11. The apparatus of claim 9, wherein the value representing the emergency session transfer number is common to a plurality of emergency communication sessions.

12. The apparatus of claim 9, wherein the first network is an internet protocol multimedia subsystem, and wherein the second network is one of a second generation cellular communications network and a third generation cellular communications network.

13. A computer-readable storage medium including code which when executed on at least one processor cause an apparatus to perform any of the method steps as claimed in any one of claims 1 to 8.

## Patentansprüche

1. Verfahren, das Folgendes umfasst:
Empfangen (510), an einer Funkvermittlungsstelle, einer ersten Nachricht, die eine Anfrage zum Übergeben einer Notfall-Kommunikationssitzung von einem ersten Netzwerk zu einem zweiten Netzwerk repräsentiert;
Erhalten (520), durch die Funkvermittlungsstelle, eines Wertes, der eine Notfallsitzungs-Übertragungsnummer repräsentiert, wobei das Erhalten des Wertes, der die Notfallsitzungs-Übertragungsnummer repräsentiert, Folgendes umfasst: Erzeugen des Wertes, der die Notfallsitzungs-Übertragungsnummer repräsentiert, an der Funkvermittlungsstelle (130, 300); und
Senden (530), durch die Funkvermittlungsstelle, einer zweiten Nachricht an das erste Netzwerk, wobei die zweite Nachricht die Übergabe der Notfall-Kommunikationssitzung von dem ersten Netzwerk zu dem zweiten Netzwerk initiiert, wobei die zweite Nachricht den Wert enthält, der die Notfallsitzungs-Übertragungsnummer repräsentiert.

2. Verfahren nach Anspruch 1, wobei das Erhalten ferner Folgendes umfasst:
lokales Erhalten, durch die Funkvermittlungsstelle, des Wertes, der die Notfallsitzungs-Übertragungsnummer repräsentiert, anstatt eine Sitzungsübertragungsnummer von einem Heimatteilnehmerserver an einem Heimnetzwerk zu erhalten.

3. Verfahren nach Anspruch 1, wobei der Wert, der die Notfallsitzungs-Übertragungsnummer repräsentiert, einer Vielzahl von Notfall-Kommunikationssitzungen gemeinsam ist.

4. Verfahren nach Anspruch 1, wobei das erste Netzwerk ein Internetprotokoll-Multimedia-Untersystem ist, und wobei das zweite Netzwerk eines von einem Zellularkommunikationsnetz der zweiten Generation und einem Zellularkommunikationsnetz der dritten Generation ist.

5. Verfahren nach Anspruch 1, wobei der Wert, der die Notfallsitzungs-Übertragungsnummer repräsentiert, eine Adresse nach der Richtlinie E.164 der Internationalen Fernmeldeunion umfasst.

6. Verfahren nach Anspruch 1, wobei die zweite Nachricht eine Sitzungseinleitungsprotokoll-Einladungsnachricht enthält.

7. Verfahren nach Anspruch 1, wobei die erste Nachricht eine Single Radio Voice Call Continuity (SRVCC) für einen Notfall eines Internetprotokoll-Multimedia-Untersystems initiiert.

8. Verfahren nach Anspruch 1, wobei das Empfangen ferner Folgendes umfasst: Empfangen, an einem besuchten Netzwerk, der ersten Nachricht.

9. Vorrichtung für eine Funkvermittlungsstelle (130, 300), die Folgendes umfasst:
mindestens einen Prozessor; und
mindestens einen Speicher, wobei der mindestens eine Prozessor und der mindestens eine Speicher dazu ausgelegt sind, Operationen bereitzustellen, die Folgendes umfassen:
Empfangen (510) einer ersten Nachricht, die eine Anfrage zum Übergeben einer Notfall-Kommunikationssitzung von einem ersten Netzwerk zu einem zweiten Netzwerk repräsentiert;
Erhalten (520) eines Wertes, der eine Notfallsitzungs-Übertragungsnummer repräsentiert, wobei das Erhalten des Wertes, der die Notfallsitzungs-Übertragungsnummer repräsentiert, Folgendes umfasst:
Erzeugen des Wertes, der die Notfallsitzungs-Übertragungsnummer repräsentiert, an der Funkvermittlungsstelle; und
Senden (530) einer zweiten Nachricht an das erste Netzwerk, wobei die zweite Nachricht die Übergabe der Notfall-Kommunikationssitzung von dem ersten Netzwerk zu dem zweiten Netzwerk initiiert, wobei die zweite Nachricht den Wert enthält, der die Notfallsitzungs-Übertragungsnummer repräsentiert.

10. Vorrichtung nach Anspruch 9, wobei das Erhalten ferner Folgendes umfasst:
lokales Erhalten des Wertes, der die Notfallsitzungs-Übertragungsnummer repräsentiert, anstatt eine Sitzungsübertragungsnummer von einem Heimatteilnehmerserver an einem Heimnetzwerk zu erhalten.

11. Vorrichtung nach Anspruch 9, wobei der Wert, der die Notfallsitzungs-Übertragungsnummer repräsentiert, einer Vielzahl von Notfall-Kommunikationssitzungen gemeinsam ist.

12. Vorrichtung nach Anspruch 9, wobei das erste Netzwerk ein Internetprotokoll-Multimedia-Untersystem ist, und wobei das zweite Netzwerk eines von einem Zellularkommunikationsnetz der zweiten Generation und einem Zellularkommunikationsnetz der dritten Generation ist.

13. Computerlesbares Speichermedium, das Code enthält, der, wenn er auf mindestens einem Prozessor ausgeführt wird, eine Vorrichtung veranlasst, die Verfahrensschritte nach einem der Ansprüche 1 bis 8 durchzuführen.

## Revendications

1. Procédé comprenant :
la réception (510), au niveau d'un centre de commutation de la mobilité, un premier message représentant une demande de transfert d'une session de communication d'urgence d'un premier réseau à un second réseau ;
l'obtention (520), par le centre de commutation de la mobilité, d'une valeur représentant un numéro de transfert de session d'urgence, dans lequel l'obtention de la valeur représentant le numéro de transfert de session d'urgence comprend :
la génération de la valeur représentant le numéro de transfert de session d'urgence au niveau du centre de commutation de la mobilité (130, 300) ; et
l'envoi (530), par le centre de commutation de la mobilité, d'un second message au premier réseau, le second message initiant le transfert de la session de communication d'urgence du premier réseau au second réseau, le second message comprenant la valeur représentant le numéro de transfert de session d'urgence.

2. Procédé selon la revendication 1, dans lequel l'obtention comprend en outre :
l'obtention, par le centre de commutation de la mobilité, de la valeur représentant le numéro de transfert de session d'urgence au niveau local plutôt que l'obtention d'un numéro de transfert de session à partir d'un serveur d'abonné domestique au niveau d'un réseau domestique.

3. Procédé selon la revendication 1, dans lequel la valeur représentant le numéro de transfert de session d'urgence est commune à une pluralité de sessions de communication d'urgence.

4. Procédé selon la revendication 1, dans lequel le premier réseau est un sous-système multimédia à protocole Internet, et dans lequel le second réseau est soit un réseau de communication cellulaire de seconde génération, soit un réseau de communication cellulaire de troisième génération.

5. Procédé selon la revendication 1, dans lequel la valeur représentant le numéro de transfert de session d'urgence comprend une adresse E.164 de l'Union internationale des télécommunications.

6. Procédé selon la revendication 1, dans lequel le second message comprend un message d'invitation du protocole d'ouverture de session.

7. Procédé selon la revendication 1, dans lequel le premier message initie une unique série continue d'appels vocaux radio pour une urgence du sous-système multimédia à protocole Internet.

8. Procédé selon la revendication 1, dans lequel la réception comprend en outre : la réception, au niveau d'un réseau visité, du premier message.

9. Appareil pour un centre de commutation de la mobilité (130, 300) comprenant :
au moins un processeur ; et
au moins une mémoire,
dans lequel le ou les processeurs et la ou les mémoires sont configurés pour fournir des opérations comprenant :
la réception (510) d'un premier message représentant une demande de transfert d'une session de communication d'urgence d'un premier réseau à un second réseau ;
l'obtention (520) d'une valeur représentant un numéro de transfert de session d'urgence, dans lequel l'obtention de la valeur représentant le numéro de transfert de session d'urgence comprend :
la génération de la valeur représentant le numéro de transfert de la session d'urgence au niveau du centre de commutation de la mobilité ; et
l'envoi (530) d'un second message au premier réseau, le second message initiant le transfert de la session de communication d'urgence du premier réseau au second réseau, le second message comprenant la valeur représentant le numéro de transfert de la session d'urgence.

10. Appareil selon la revendication 9, dans lequel l'obtention comprend en outre :
l'obtention de la valeur représentant le numéro de transfert de session d'urgence au niveau local plutôt que l'obtention d'un numéro de transfert de session à partir d'un serveur d'abonné domestique au niveau d'un réseau domestique.

11. Appareil selon la revendication 9, dans lequel la valeur représentant le numéro de transfert de session d'urgence est commune à une pluralité de sessions de communication d'urgence.

12. Appareil selon la revendication 9, dans lequel le premier réseau est un sous-système multimédia à protocole Internet, et dans lequel le second réseau est soit un réseau de communication cellulaire de seconde génération, soit un réseau de communication cellulaire de troisième génération.

13. Support de mémoire lisible par ordinateur comprenant un code qui, lorsqu'il est exécuté sur au moins un processeur, amène un appareil à exécuter l'une quelconque des étapes du procédé selon l'une quelconque des revendications 1 à 8.
